# EUROPEAN PATENT APPLICATION

(11) **EP 4 614 290 A1**
(43) Date of publication of application: **10.09.2025**
(21) Application number: 24820530.4
(22) Date of filing: 26.01.2024
(51) Int. Cl.: G06F 3/0354

(54) **TOUCH SCREEN RESPONSE METHOD, ELECTRONIC PEN RESPONSE METHOD, AND TOUCH SYSTEM**

(71) Applicant: Guangzhou Shiyuan Electronic Technology Company Limited, Guangzhou, Guangdong 510530 (CN); Guangzhou Shirui Electronics Co., Ltd., Guangzhou, Guangdong 510663 (CN)
(72) Inventor: HUO, Dongjian, Guangzhou, Guangdong 510530 (CN); HAO, Shuaikai, Guangzhou, Guangdong 510530 (CN)
(74) Representative: Grünecker Patent- und Rechtsanwälte PartG mbB
(86) International application number: PCT/CN2024/074229
(87) International publication number: WO 2025/156254

(57) **Abstract**

The present disclosure relates to a touch-screen operating method, an electronic-pen operating method, a touch-screen operating apparatus and a touch system. The touch-screen operating method includes: the electronic pen generates a target color signal when a target color gear and a tip are triggered simultaneously; the electronic device starts a timer when the target color signal transmitted by the electronic pen is received; a touch screen on the electronic device generates first coordinate information; and the electronic device judges that the coordinate information is an electronic-pen triggering event when first coordinate information is obtained within a preset period, and responds to the electronic-pen triggering event on the touch screen based on the target color signal and the first coordinate information. Through this method, the electronic device can recognize a hand touch operation or a pen touch operation without the need for users to manually select an interaction mode before touch operations. Users can directly perform hand touch operation or pen touch operation on the touch screen, reducing the steps of human-computer interaction and improving the efficiency of touch screen operation.

## Description

### FIELD

The present disclosure relates to the field of human-computer interaction technology, and in particular to a touch-screen operating method, an electronic-pen operating method, a touch-screen operating apparatus, an electronic-pen operating apparatus, a touch system, a computer device, a storage medium, and a computer program product.

### BACKGROUND

With the improvement of technology and quality of life, more and more intelligent devices are appearing in daily work and life of people, and touch devices are one of them, such as interactive intelligent panels (IIP). People may directly operate on the display screen through touch devices, without the need for a mouse or other device for wired or wireless operations, which is convenient and fast. At the same time, writing devices capable of writing on touch devices have also emerged. People may write freely on touch devices by using writing devices, just like using a pen. It is also possible to select a color of handwriting or a type of stroke according to needs of users.

Traditional solutions generally require users to select an input mode from a menu on the tablet before inputting a touch command, such as select a normal input mode or electronic-pen input mode. In application scenarios that require repeated switching of input modes, this greatly increases the workload of users and leads to low operational efficiency.

The current electronic devices are difficult to recognize touch operations with a stylus, which affects the efficiency of user operation.

### SUMMARY

Based on that, it is necessary to provide, for the above-mentioned technical problem, a touch-screen operating method, an electronic-pen operating method, a touch-screen operating apparatus, an electronic-pen operating apparatus, a touch system, a computer device, a storage medium, and a computer program product that can recognize a hand touch operation or a pen touch operation.

According to a first aspect of the present disclosure, a touch-screen operating method is provided, the touch-screen operating method is applied to an electronic device equipped with a touch screen, the electronic device is further equipped with an electronic pen, and the electronic pen has a tip and at least one color gear capable of being triggered, the touch-screen operating method includes:
when a target color signal transmitted by the electronic pen is received, starting a timer; where the target color signal is generated by the electronic pen when both the target color gear and the tip are triggered simultaneously;
when first coordinate information is obtained within a preset period, judging that the coordinate information is an electronic-pen triggering event; where the first coordinate information is generated by the touch screen responding to a first touch input; and
based on the target color signal and the first coordinate information, responding to the electronic-pen triggering event on the touch screen.

In an embodiment, the based on the target color signal and the first coordinate information, responding to the electronic-pen triggering event on the touch screen includes:
determining a writing trajectory based on the first coordinate information;
determining a target color of the writing trajectory based on the target color signal; and
displaying the writing trajectory on the touch screen based on the target color.

In an embodiment, the method further includes:
when the first coordinate information is not obtained within the preset period, regarding the target color signal as an interference signal.

In an embodiment, the method further includes:
when the target color signal is not obtained, in response to a second touch operation on the touch screen, obtaining second coordinate information and judging that the second coordinate information is a non-electronic-pen triggering event; and
responding to non-electronic-pen triggering event on the touch screen based on the second coordinate information.

In an embodiment, responding to non-electronic-pen triggering event on the touch screen based on the second coordinate information includes:
determining a touch trajectory based on the second coordinate information; and
adjusting a display content on the touch screen based on the touch trajectory.

According to a second aspect of the present disclosure, an electronic-pen operating method is further provided, the electronic-pen operating method is applied to an electronic pen equipped with a tip and at least one color gear capable of being triggered, the electronic pen is further equipped with an electronic device having a touch screen, the electronic-pen operating method includes:
when a target color gear is triggered, determining the target color corresponding to the target color gear; and
when the tip is triggered, generating the target color signal corresponding to the target color, and transmitting the target color signal to the electronic device; where the target color signal is used to indicate the electronic device to start a timer, judge that the coordinate information is an electronic-pen triggering event when first coordinate information is obtained within a preset period,, and based on the target color signal and the first coordinate information, respond to the electronic-pen triggering event on the touch screen; where the first coordinate information is generated by the touch screen responding to the first touch operation.

In an embodiment, the electronic pen is equipped with at least one independent non-self-locking button, each non-self-locking button corresponds to a color gear, and each non-self-locking button is equipped with a color indicator light that matches the corresponding color gear; the method further includes:
when the non-self-locking button corresponding to the target color gear is pressed, determining the target color corresponding to the target color gear, turning on the color indicator light corresponding to the target color gear until the non-self-locking button corresponding to the new color gear is pressed; and
when the tip is triggered, generating the target color signal corresponding to the target color and transmitting the target color signal to the electronic device.

In an embodiment, the electronic pen is equipped with a toggle switch, the toggle switch includes multiple toggle positions, each toggle position corresponds to a color gear, and each toggle position is equipped with a color identifier that matches the corresponding color gear; the method further includes:
when the tip is triggered, recognizing the target color gear triggered currently; where the target color gear is determined based on a toggle position where the toggle switch is located, and the target color gear is used to determine the target color;
generating a target color signal corresponding to the target color and transmitting the target color signal to the electronic device; and
when the electronic device receives the target color signal, switching to a low-power mode until the toggle switch changes the toggle position.

According to a third aspect of the present disclosure, a touch-screen operating apparatus is further provided, the touch-screen operating apparatus is applied to an electronic device, the electronic device is equipped with a touch screen, the electronic device is further equipped with an electronic pen, and the electronic pen has a tip and at least one color gear capable of being triggered, the touch-screen operating apparatus includes:
a timer configured to, when a target color signal transmitted by the electronic pen is received, start a timer; where the target color signal is generated by the electronic pen when both the target color gear and the tip are triggered simultaneously;
a judging module configured to, when first coordinate information is obtained within a preset period, judge that the coordinate information is an electronic-pen triggering event; where the first coordinate information is generated by the touch screen responding to a first touch input; and
a responding module configured to, based on the target color signal and the first coordinate information, respond to the electronic-pen triggering event on the touch screen.

According to a fourth aspect of the present disclosure, an electronic-pen operating apparatus is further provided, the electronic-pen operating apparatus is applied to an electronic pen equipped with a tip and at least one color gear capable of being triggered, the electronic pen is further equipped with an electronic device having a touch screen, the electronic-pen operating apparatus includes:
a determining module configured to, when the target color gear is triggered, determine the target color corresponding to the target color gear; and
a transmitting module configured to, when the tip is triggered, generate a target color signal corresponding to the target color, and transmit the target color signal to the electronic device; where the target color signal is used to indicate the electronic device to start a timer, judge that the coordinate information is an electronic-pen triggering event when first coordinate information is obtained within a preset period, and based on the target color signal and the first coordinate information, respond to the electronic-pen triggering event on the touch screen; where the first coordinate information is generated by the touch screen responding to the first touch operation.

According to a fifth aspect of the present disclosure, a touch system is further provided, including an electronic device which is equipped with a touch screen, and an electronic pen which is equipped with a tip capable and at least one color gear capable of being triggered;
the electronic pen is used to when the target color gear is triggered, determine the target color corresponding to the target color gear; and when the tip is triggered, transmit a target color signal to the electronic device;
the electronic device is used to, when a target color signal transmitted by the electronic pen is received, start a timer; when first coordinate information is obtained within a preset period, judge that the coordinate information is an electronic-pen triggering event; and respond to the electronic-pen triggering event on the touch screen based on the target color signal and the first coordinate information; where the first coordinate information is generated by the touch screen responding to the first touch operation.

According to a sixth aspect of the present disclosure, a computer device is further provided, including a memory and a processor, the memory stores a computer program, and when the processor executes the computer program, the following steps are performed:
when a target color signal transmitted by the electronic pen is received, starting a timer; where the target color signal is generated by the electronic pen when both the target color gear and the tip are triggered simultaneously;
when first coordinate information is obtained within a preset period, judging that the coordinate information is an electronic-pen triggering event; where the first coordinate information is generated by the touch screen responding to a first touch input; and
based on the target color signal and the first coordinate information, responding to the electronic-pen triggering event on the touch screen.

According to a seventh aspect of the present disclosure, a computer-readable storage medium is further provided, on which a computer program is stored, when the computer program is executed by a processor, the following steps are performed:
when a target color signal transmitted by the electronic pen is received, starting a timer; where the target color signal is generated by the electronic pen when both the target color gear and the tip are triggered simultaneously;
when first coordinate information is obtained within a preset period, judging that the coordinate information is an electronic-pen triggering event; where the first coordinate information is generated by the touch screen responding to a first touch input; and
based on the target color signal and the first coordinate information, responding to the electronic-pen triggering event on the touch screen.

According to an eighth aspect of the present disclosure, a computer program product is further provided, including a computer program, when the computer program is executed by a processor, the following steps are performed:
when a target color signal transmitted by the electronic pen is received, starting a timer; where the target color signal is generated by the electronic pen when both the target color gear and the tip are triggered simultaneously;
when first coordinate information is obtained within a preset period, judging that the coordinate information is an electronic-pen triggering event; where the first coordinate information is generated by the touch screen responding to a first touch input; and
based on the target color signal and the first coordinate information, responding to the electronic-pen triggering event on the touch screen.

According to the above-mentioned touch-screen operating method, electronic-pen operating method, touch-screen operating apparatus, electronic-pen operating apparatus, touch system, computer device, storage medium, and computer program product, the electronic pen generates the target color signal when the target color gear and the tip are triggered simultaneously; the electronic device starts a timer when the target color signal transmitted by the electronic pen is received; the touch screen on the electronic device generates the first coordinate information in response to a first touch input; and the electronic device judges that the coordinate information is an electronic-pen triggering event when first coordinate information is obtained within a preset period, and responds to the electronic-pen triggering event on the touch screen based on the target color signal and the first coordinate information. The electronic device can recognize a hand touch operation or a pen touch operation without the need for users to manually select an interaction mode before touch operations. Users can directly perform hand touch operation or pen touch operation on the touch screen, reducing the steps of human-computer interaction and improving the efficiency of touch screen operation.

### BRIEF DESCRIPTION OF THE DRAWINGS

In order to provide a clearer description of the technical solutions in the embodiments or traditional technologies of the present disclosure, a brief introduction will be given to the accompanying drawings required for the description of the embodiments or traditional technologies. It is obvious that the accompanying drawings described below are only embodiments of the present disclosure. For those skilled in the art, other drawings may be obtained based on the disclosed drawings without creative labor.
Fig. 1 is an application environment diagram of a touch-screen operating method according to an embodiment.
Fig. 2 is a flowchart of a touch-screen operating method according to an embodiment.
Fig. 3 is a flowchart of an electronic-pen operating method according to an embodiment.
Fig. 4 is a schematic diagram of an electronic pen with non-self-locking buttons according to an embodiment.
Fig. 5 is a schematic diagram of an interrupt detection circuit of a non-self-locking button according to an embodiment.
Fig. 6 is a schematic diagram of an electronic pen with toggle switches according to an embodiment.
Fig. 7 is a schematic diagram of an interrupt detection circuit of a toggle switch according to an embodiment.
Fig. 8 is a schematic diagram of a workflow of a touch system according to an embodiment.
Fig. 9 is a schematic diagram of a workflow of a touch system according to another embodiment.
Fig. 10 is a block diagram of a structure of a touch-screen operating apparatus according to an embodiment.
Fig. 11 is a block diagram of a structure of an electronic-pen operating apparatus according to an embodiment.
Fig. 12 is an internal structural diagram of a computer device according to an embodiment.

### DESCRIPTION OF THE PREFERRED EMBODIMENTS

The following will provide a clear and complete description of the technical solution in the embodiments of the present disclosure, based on the accompanying drawings. Obviously, the described embodiments are only a part of the embodiments of the present disclosure, not all of them. Based on the embodiments in the present disclosure, all other embodiments obtained by those skilled in the art without creative labor are within the scope of protection of the present disclosure.

Interactive intelligent panel (IIP) includes conference tablets used in conference scenarios and educational tablets used in educational scenarios. In the use scenarios of conference tablets or educational tablets, different colored pens are often required for writing, labeling, and other operations. The traditional solution is usually to switch colors through a menu on the tablet, which increases user operation and is different from real-life usage habits. In reality, multiple pens may be used to correspond to multiple colors, or a single pen may be used to switch between multiple colors. In short, pens of corresponding colors may write words of corresponding colors. The traditional entire system may only respond to touch operations on the touch screen. For the entire system, it does not know what object is touching the touch screen, and may only respond to all touch operations in the selected operation mode in the same way. During PPT presentations, users often need to annotate a content of the PPT. As the entire system cannot recognize whether the touch operation is with a pen or a hand, it is impossible to know whether the user wants to perform menu operations or write annotations. Therefore, users are required to click on the "Annotation" menu first to enter a writing mode. This adds an extra step to the operation, and users often forget about it. When they pick up the pen, they want to annotate directly. After discovering the operation error, they then perform operations such as undo and reselect, which affects the efficiency and user experience of the operation.

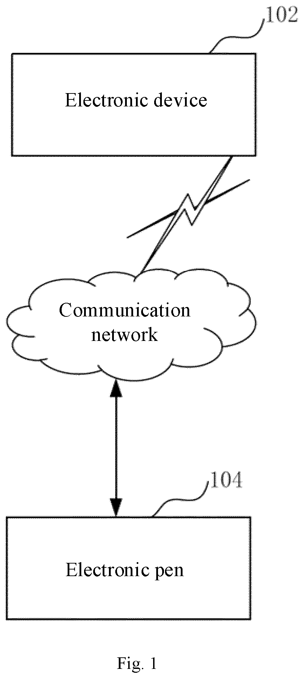

If the entire system may recognize whether the touch operation is done with an electronic pen or a hand, the entire system may separately set touch functions based on the electronic pen and hand, achieving the function of separating hand touch operations. Users no longer need to select the interaction mode on the touch screen before touch operation, and may directly perform hand touch operation or pen touch operation on the touch screen, eliminating the step of mode selection and improving the overall efficiency of touch operation. According to an embodiment of the present disclosure, the touch-screen operating method may be applied to the application environment shown in Fig. 1. An electronic device 102 communicates with an electronic pen 104 through a data cable or network. The electronic device 102 is equipped with a touch screen. The electronic pen 104 is equipped with a tip and at least one color gear capable of being triggered. The internal of the electronic pen 104 is equipped with a microprocessor, and the internal of the tip is equipped with a pressure sensor or a press switch, which may be triggered by contact or pressing. The electronic device 102 may include but is not limited to various interactive intelligent tablets, personal computers, laptops, smartphones, tablets, IoT devices, and portable wearable devices. IoT devices may include intelligent speakers, intelligent TVs, intelligent air conditioners, intelligent car devices, etc. Portable wearable devices may include smartwatches, smart bracelets, head mounted devices, etc.

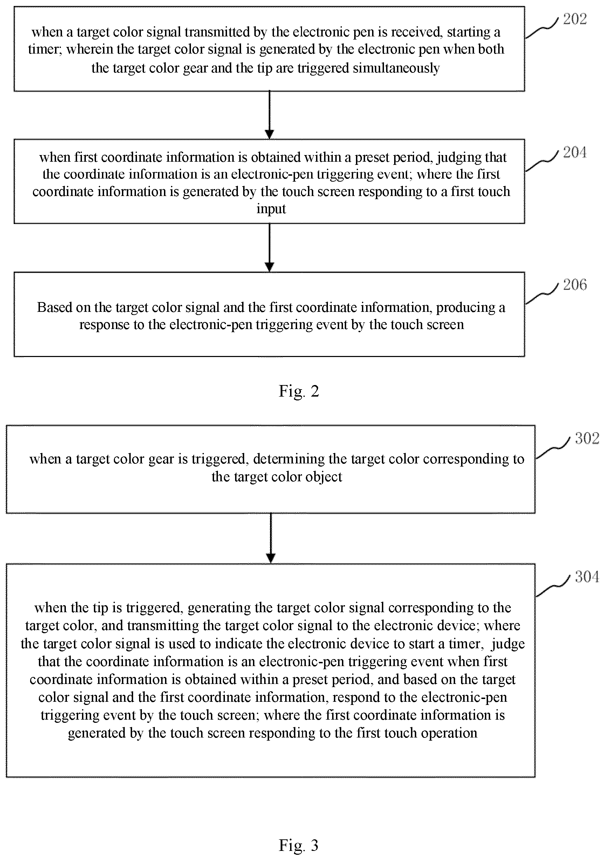

In an exemplary embodiment, as shown in Fig. 2, a touch-screen operating method is provided, the touch-screen operating method is applied to the electronic device 102 in Fig. 1 as an example for description, including the following steps 202 to 206.

Step 202, when a target color signal transmitted by the electronic pen is received, starting a timer; where the target color signal is generated by the electronic pen when both the target color gear and the tip are triggered simultaneously.

Optionally, when the user needs to input with an electronic pen on the touch screen, any color gear may be triggered on the electronic pen as the target color gear; after the target color gear is triggered, the electronic pen determines the target color selected by the user and waits for the tip to be triggered; when the tip is triggered, a target color signal corresponding to the target color is transmitted to the electronic device. When the electronic terminal receives the target color signal, a timer is started.

It should be noted that triggering the tip does not mean that the tip comes into contact with the touch screen. When the tip comes into contact with any object and is subjected to pressure, it may be considered as a triggered state.

Step 204, when first coordinate information is obtained within a preset period, judging that the coordinate information is an electronic-pen triggering event; where the first coordinate information is generated by the touch screen responding to a first touch input.

The preset period is usually measured in milliseconds (ms) and may be set to 10ms, but is not limited to it. The first touch input may be, but is not limited to, touch point press, touch movement, and other operations of the electronic pen on the touch screen.

Optionally, after the electronic terminal starts a timer, coordinate information is obtained through the touch screen. If the coordinate information is obtained within the preset period, it is considered as the first coordinate information, and it is judged that the first coordinate information is generated by trigger of the electronic pen, that is, it is judged that the current user is performing an electronic-pen touch operation. The electronic-pen touch operation refers to the touch operation of the electronic tip contacting the touch screen, which may include but is not limited to writing text, drawing graphics, and adding color marks.

Furthermore, when the electronic terminal judges that the first coordinate information is triggered by the electronic pen, a corresponding electronic-pen response result is displayed on the touch screen based on the target color signal and the first coordinate information. The electronic-pen response result may reflect the target color, the first coordinate information, and the corresponding characteristics of the electronic-pen touch operation.

In the above-mentioned touch-screen operating method, the electronic pen generates the target color signal when the target color gear and the tip are triggered simultaneously; the electronic device starts a timer when a target color signal transmitted by the electronic pen is received; the touch screen on the electronic device generates the first coordinate information in response to a first touch input; the electronic device judges that the coordinate information is an electronic-pen triggering event when first coordinate information is obtained within a preset period, and responds to the electronic-pen triggering event on the touch screen based on the target color signal and the first coordinate information. The electronic device can recognize a hand touch operation or a pen touch operation without the need for users to manually select an interaction mode before touch operations. Users can directly perform hand or pen touch operations on the touch screen, reducing the steps of human-computer interaction and improving the efficiency of touch screen operation.

In an embodiment, the based on the target color signal and the first coordinate information, responding to the electronic-pen triggering event on the touch screen includes: determining a writing trajectory based on the first coordinate information; determining a target color of the writing trajectory based on the target color signal; and displaying the writing trajectory on the touch screen based on the target color.

Optionally, when the electronic terminal judges that the first coordinate information is an electronic-pen triggering event, the movement trajectory of the electronic tip on the touch screen is determined based on the first coordinate information, and the movement trajectory is used as the writing trajectory to be displayed on the touch screen, the target color of the current writing trajectory is determined based on the target color signal, and finally the writing trajectory of the target color is displayed on the touch screen, thereby achieving recognition and response to the electronic-pen triggering event.

In this embodiment, the electronic pen generates the target color signal when the target color gear and the tip are triggered simultaneously; the electronic device starts a timer when a target color signal transmitted by the electronic pen is received; the touch screen on the electronic device generates the first coordinate information in response to a first touch input; the electronic device judges that the coordinate information is an electronic-pen triggering event when first coordinate information is obtained within a preset period, and determines the writing trajectory based on the first coordinate information; determines the target color of the writing trajectory based on the target color signal; and displays the writing trajectory on the touch screen based on the target color. The electronic device can recognize touch operations of a stylus without the need for users to manually select an interaction mode before touch operations. Users can directly perform pen touch operations on the touch screen, reducing the steps of human-computer interaction and improving the efficiency of touch screen operation.

In an embodiment, the method further includes: when the first coordinate information is not obtained within the preset period, regarding the target color signal as an interference signal which does not need respond.

Optionally, when the electronic device receives the target color signal transmitted by the electronic pen, the electronic device starts a timer and obtains the coordinate information through the touch screen. When the electronic tip does not touch the touch screen within the preset period, that is, the user has not made any touch input operation on the touch screen, the electronic device does not obtain any coordinate information within the preset time. It will be judged that the target color signal transmitted by the electronic pen is generated by the electronic pen being accidentally touched, the target color signal is regarded as an interference signal and no processing is executed.

In a feasible implementation, after the target color signal is regarded as an interference signal, the electronic device may further display a prompt message on the touch screen to alert the user that the color gear of the electronic pen has been accidentally touched.

In this embodiment, the electronic pen generates the target color signal when the target color gear and the tip are triggered simultaneously; the electronic device starts a timer when a target color signal transmitted by the electronic pen is received; and when the first coordinate information is not obtained within the preset period, regards the target color signal as an interference signal. The electronic device can recognize touch operations of a stylus without the need for users to manually select an interaction mode before touch operations. Users can directly perform pen touch operations on the touch screen, the electronic devices can directly respond correctly to pen touch operations, and when the electronic pen does not make correct contact with the touch screen, the electronic device can also judge and recognize the mis-operation of the electronic pen and does not respond, reducing the steps of human-computer interaction and improving the efficiency of touch screen operation.

In an embodiment, the method further includes: when the target color signal is not obtained, obtaining second coordinate information in response to a touch operation on the touch screen; and responding on the touch screen based on the second coordinate information.

Optionally, the electronic terminal continuously obtains coordinate information through the touch screen when the target color signal is not obtained. If the coordinate information is obtained, it is considered as the second coordinate information, and it is judges that the second coordinate information is not generated by the electronic pen triggering, that is, it is judges that the current user is performing a non-electronic-pen touch operation. When the electronic terminal judges that the second coordinate information is generated by a non-electronic pen triggering, the corresponding non-electronic-pen response result is displayed on the touch screen based on the second coordinate information. The non-electronic-pen response result may reflect the corresponding characteristics of the second coordinate information and finger touch operation. The non-electronic-pen touch operation refers to the touch operation of a finger or passive pen touching a touch screen, which may include but is not limited to moving the interface, flipping pages forward and backward, zooming in and out, adjusting volume, and adjusting screen brightness.

In this embodiment, the electronic device responds to the second touch operation on the touch screen, obtains the second coordinate information and judges that the second coordinate information is a non-electronic-pen triggering event when the target color signal is not obtained; responds to non-electronic-pen triggering event on the touch screen based on the second coordinate information. The electronic device can recognize a hand touch operation without the need for users to manually select an interaction mode before touch operations. Users can directly perform hand touch operations on the touch screen, and the electronic device can respond correctly to hand touch operations, reducing human-machine interaction steps and improving the efficiency of touch screen operation.

In an embodiment, the responding to non-electronic-pen triggering event on the touch screen based on the second coordinate information includes: determining a touch trajectory based on the second coordinate information; and adjusting a display content on the touch screen based on the touch trajectory.

Optionally, when the electronic terminal judges that the second coordinate information is a non-electronic-pen triggering event, the movement trajectory of a finger or passive pen on the touch screen is determined based on the second coordinate information, and the movement trajectory is used as the touch input trajectory of the user on the touch screen, based on a mapping relationship between the touch trajectory and the touch command, an touch command input by the user is determined, and finally a display content on the touch screen is adjusted based on the touch command, such as moving, zooming in or out of the display interface in the touch screen, flipping pages back and forth, adjusting volume, and adjusting screen brightness, so as to achieve recognition and response to non-electronic-pen triggering events.

In this embodiment, the electronic device responds to the second touch operation on the touch screen, obtains the second coordinate information and judges that the second coordinate information is a non-electronic-pen triggering event when the target color signal is not obtained; determines the touch trajectory based on the second coordinate information; adjusts the display content on the touch screen based on the touch trajectory. The electronic device can recognize a hand touch operation without the need for users to manually select an interaction mode before touch operations. Users can directly perform hand touch operations on the touch screen, and the electronic device can respond correctly to hand touch operations, reducing human-machine interaction steps and improving the efficiency of touch screen operation.

In an embodiment, a touch-screen operating method, taking the touch-screen operating method being applied to the electronic device 102 in Fig. 1 as example, including:
when the target color signal is not obtained, in response to a second touch operation on the touch screen, obtaining second coordinate information and judging that the second coordinate information is a non-electronic-pen triggering event; determining a touch trajectory based on the second coordinate information; and adjusting a display content on the touch screen based on the touch trajectory.

When a target color signal transmitted by the electronic pen is received, starting a timer; where the target color signal is generated by the electronic pen when both the target color gear and the tip are triggered simultaneously.

When first coordinate information is obtained within a preset period, judging that the coordinate information is an electronic-pen triggering event; where the first coordinate information is generated by the touch screen responding to a first touch input; determining a writing trajectory based on the first coordinate information; determining a target color of the writing trajectory based on the target color signal; and displaying the writing trajectory on the touch screen based on the target color.

When the first coordinate information is not obtained within the preset period, regarding the target color signal as an interference signal.

In an exemplary embodiment, as shown in Fig. 2, an electronic-pen operating method is further provided, the electronic-pen operating method is applied to the electronic pen 104 in Fig. 1 as an example for description, including the following steps 302 to 304.

Step 302, when a target color gear is triggered, determining the target color corresponding to the target color gear.

Optionally, when users need to use an electronic pen to touch the touch screen, they may select the target color on the electronic pen and trigger the corresponding target color gear. When the target color gear is triggered, the electronic pen determines the target color currently selected by the user.

Step 304, when the tip is triggered, generating the target color signal corresponding to the target color, and transmitting the target color signal to the electronic device; where the target color signal is used to indicate the electronic device to start a timer, judge that the coordinate information is an electronic-pen triggering event when first coordinate information is obtained within a preset period, and based on the target color signal and the first coordinate information, respond to the electronic-pen triggering event by the touch screen; where the first coordinate information is generated by the touch screen responding to the first touch operation.

Optionally, when the tip is triggered by pressure, the electronic pen generates a corresponding target color signal based on the currently determined target color and transmits the target color signal to the electronic device.

The electronic device starts a timer when the target color signal transmitted by the electronic pen is received. When the first coordinate information is obtained within a preset period, The electronic device judges that the coordinate information is an electronic-pen triggering event, and responds to the electronic-pen triggering event on the touch screen based on the target color signal and the first coordinate information; when the first coordinate information is not obtained within the preset period, the electronic device regards the target color signal as an interference signal.

In a feasible implementation, the electronic pen is equipped with at least one independent non-self-locking button, each non-self-locking button corresponds to a color gear, and each non-self-locking button is equipped with a color indicator light that matches the corresponding color gear; the method further includes: when the non-self-locking button corresponding to the target color gear is pressed, determining the target color corresponding to the target color gear, turning on the color indicator light corresponding to the target color gear until the non-self-locking button corresponding to the new color gear is pressed; and when the tip is triggered, generating the target color signal corresponding to the target color and transmitting the target color signal to the electronic device.

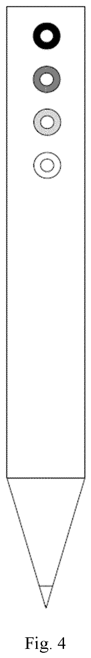

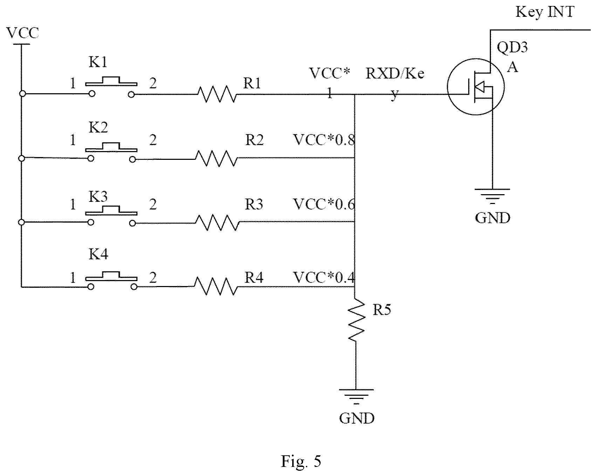

Specifically, the electronic pen with four independent non-self-locking buttons is shown in Fig. 4. The pen body has four colored touch buttons, namely non-self-locking buttons. When pressed and released, the buttons bounce back, such as blue, green, red, and white buttons, and LED lights of corresponding colors are placed on both sides of the buttons. The electronic pen is equipped with an MCU circuit, the MCU has four sets of ID1, ID2, ID3, and ID4 codes corresponding to the four colors mentioned above. The electronic pen further has an interrupt detection circuit of buttons, as shown in Fig. 5. R1, R2, R3, R4 are divided into voltage with R5, where the divided voltage values are VCC*1, VCC*0.8, VCC*0.6, VCC*0.4, other voltage ratios may also be set. It should be noted that the minimum voltage division here must be greater than the VGS turn-on voltage of QD3A. Only when the button is pressed may the reverse interrupt signal Key_INT be generated; the MCU detect the voltage of RXD/Key through ADC sampling to judge which button is pressed, and then based on the pressed button, the MCU records the target color currently selected by the user, and when the tip is triggered, the corresponding target color signal is generated based on the recorded target color and transmitted to the electronic device.

In another feasible implementation, the electronic pen is equipped with a toggle switch, the toggle switch includes multiple toggle positions. Each toggle position corresponds to a color gear, and each toggle position is equipped with a color identifier that matches the corresponding color gear; the method further includes: when the tip is triggered, recognizing a currently triggered target color gear; where the target color gear is determined based on a toggle position where the toggle switch is located, and the target color gear is used to determine the target color; generating a target color signal corresponding to the target color and transmitting the target color signal to the electronic device; and when the electronic device receives the target color signal, switching to a low-power mode until the toggle switch changes the toggle position.

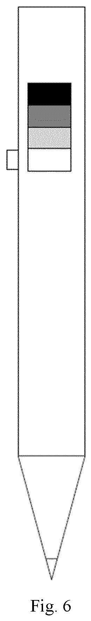

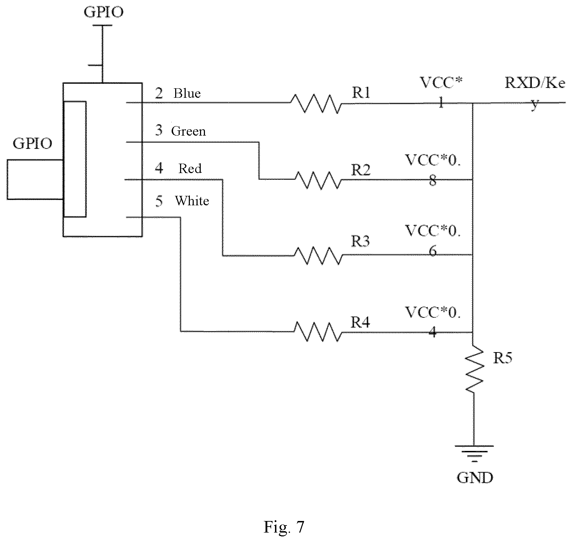

Specifically, the electronic pen equipped with a toggle switch is shown in Fig. 6. The toggle switch has four color gears, and each rang is silk screened with a color, such as blue, green, red, and white. In order to make it a low-power pen, the LED color indicator light has been removed. The electronic pen is equipped with an MCU circuit, the MCU has four sets of ID1, ID2, ID3, and ID4 codes corresponding to the four colors mentioned above. Because the toggle switch has a self-locking function, when it is turned to a certain gear, it maintains the state of that gear. When the tip is not triggered, the MCU will default to standby mode. The MCU does not need to record any data or process it. Only when the tip is triggered, the MCU is awakened, recognizes the target color gear that is currently triggered, generates the corresponding target color signal based on the target color gear, and transmits the target color signal to the electronic device. After the transmission is completed, the MCU returns to standby mode. **In** this way, the MCU power consumption of the electronic pen is greatly reduced, realizing a low-power electronic pen design scheme. The electronic pen also has a button interrupt detection circuit, as shown in Fig. 7. The **GPIO** that provides voltage to the voltage divider circuit will be turned off when the MCU is in standby mode, therefore, users cannot generate interrupts to wake up the MCU by shifting the gear. For example, pushing the switch to the blue position indicates that pins 1 and 2 are connected.

**In** this embodiment, the electronic pen generates the target color signal when the target color gear and the tip are triggered simultaneously; the electronic device starts a timer when a target color signal transmitted by the electronic pen is received; the electronic device judges that the coordinate information is an electronic-pen triggering event when first coordinate information is obtained within a preset period, and responds to the electronic-pen triggering event on the touch screen based on the target color signal and the first coordinate information. The function of switching four colors with a single active pen has been implemented. After the user selects any color, the electronic device can recognize the pen touch operation without the need for the user to manually select an interaction mode before the touch operation. Users can directly perform hand touch operation or pen touch operation on the touch screen, reducing the steps of human-computer interaction and improving the efficiency of touch screen operation.

In an exemplary embodiment, a touch system is provided by combining the touch-screen operating method and the electronic-pen operating method described above, including an electronic device which is equipped with a touch screen, and an electronic pen which is equipped with a tip and at least one color gear capable of being triggered;
the electronic pen is used to when the target color gear is triggered, determine the target color corresponding to the target color gear; and when the tip is triggered, transmit a target color signal to the electronic device;
the electronic device is used to, when a target color signal transmitted by the electronic pen is received, start a timer; when first coordinate information is obtained within a preset period, judge that the coordinate information is an electronic-pen triggering event; and based on the target color signal and the first coordinate information, respond to the electronic-pen triggering event on the touch screen; where the first coordinate information is generated by the touch screen responding to the first touch operation.

In an embodiment, the electronic device is further used to determine a writing trajectory based on the first coordinate information; determine a target color of the writing trajectory based on the target color signal; and display the writing trajectory on the touch screen based on the target color.

In an embodiment, the electronic device is further used to, when the first coordinate information is not obtained within the preset period, regard the target color signal as an interference signal.

In an embodiment, the electronic device is further used to, when the target color signal is not obtained, in response to a second touch operation on the touch screen, obtain second coordinate information and judge that the second coordinate information is a non-electronic-pen triggering event; and respond to non-electronic-pen triggering event on the touch screen based on the second coordinate information.

In an embodiment, the electronic device is further used to determine a touch trajectory based on the second coordinate information; and adjust a display content on the touch screen based on the touch trajectory.

In an embodiment, as shown in Fig. 4, the electronic pen is equipped with at least one independent non-self-locking button, each non-self-locking button corresponds to a color gear, and each non-self-locking button is equipped with a color indicator light that matches the corresponding color gear;
the electronic pen is further used to, when the non-self-locking button corresponding to the target color gear is pressed, determine the target color corresponding to the target color gear, turn on the color indicator light corresponding to the target color gear until the non-self-locking button corresponding to the new color gear is pressed; and when the tip is triggered, generating the target color signal corresponding to the target color and transmitting the target color signal to the electronic device.

In an embodiment, as shown in Fig. 6, the electronic pen is equipped with a toggle switch, the toggle switch includes multiple toggle positions, each toggle position corresponds to a color gear, and each toggle position is equipped with a color identifier that matches the corresponding color gear;

the electronic pen is further used to, when the tip is triggered, recognize the target color gear triggered currently; where the target color gear is determined based on a toggle position where the toggle switch is located, and the target color gear is used to determine the target color; generate a target color signal corresponding to the target color and transmitting the target color signal to the electronic device; and when the electronic device receives the target color signal, switch to a low-power mode until the toggle switch changes the toggle position.

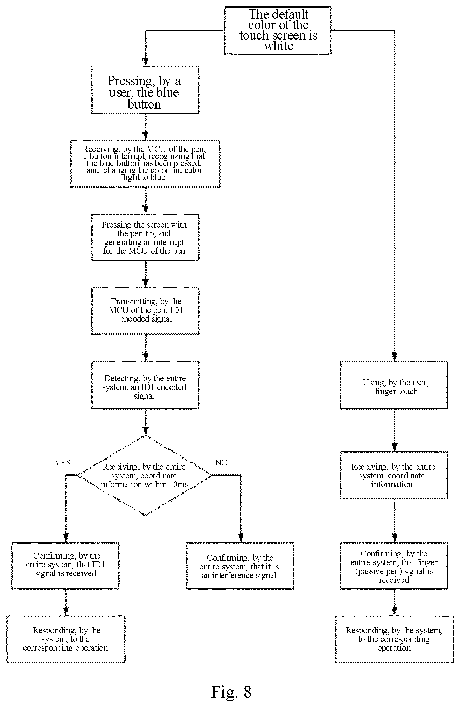

Taking the electronic pen shown in Fig. 4 as an example, the pen body has four colored touch buttons, such as blue, green, red, and white, and LED lights of corresponding colors are placed on both sides of the buttons. The electronic pen is equipped with an MCU circuit, the MCU has four sets of ID1, ID2, ID3, and ID4 codes corresponding to the four colors mentioned above. The default color of the touch screen is white. The workflow of the touch system is shown in Fig. 8, including: when the pen is used, pressing, by a user, the blue button, generating a button interrupt signal, after the interrupt signal is received, detecting, by the MCU, a voltage value through an ADC interface, when the voltage value matches the preset blue button, considering that the blue button is pressed; taking an example of preset voltage values: blue=VCC, green=0.8 * VCC, red=0.6 * VCC, white=0.4 * VCC, where VCC is a power supply voltage of the MCU; after being judged, changing, by the MCU, the color indicator light of the pen to blue.

When the tip presses the screen, an interrupt signal is generated. After receiving this interrupt signal, the MCU sends an ID1 encoded signal; the encoded signal is either an infrared encoded signal or a radio encoded signal. The entire system receives an encoded signal and recognizes them. At the same time, the entire system judges whether coordinate information has been received within 10ms. If received, the entire system confirms receipt of the signal of ID1, in response to the operation corresponding to ID1, displaying the corresponding color. If not received, the entire system considers that it is a false triggering of the user and will not respond to any action. If the user uses a finger or passive pen for touch operation, the entire system only receives coordinate information, then the entire system responds to the operation corresponding to the finger or passive pen. Due to the recognition of pen and hand touch by the entire system, the function of separating hand touch operation and pen touch operation can be achieved.

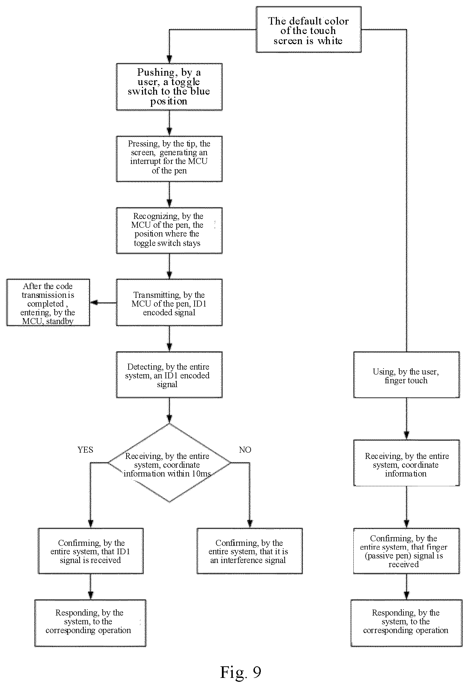

For example, taking the electronic pen shown in Fig. 6 as an example, the pen body is equipped with one toggle switch having four gears, and each gear is silk screened with a color, such as blue, green, red, and white. In order to make it a low-power pen, the LED color indicator light has been removed. The pen is equipped with an MCU circuit, the MCU has four sets of ID1, ID2, ID3, and ID4 codes corresponding to the four colors mentioned above. The workflow of the touch system is shown in Fig. 9, including: pushing, by a user, the toggle switch to the blue position, and not performing, by the MCU, any operation. When the tip presses the screen, an interrupt signal is generated. After receiving this interrupt signal, the MCU uses an internal push-pull circuit to make the GPIO voltage equal to VCC, and the toggle switch detection circuit is powered. Then, the MCU detects the voltage of RXD/Key through ADC sampling to judge which position the toggle switch is in. For example, in the blue position, the MCU sends an ID1 encoded signal finally. The encoded signal is either an infrared encoded signal or a radio encoded signal. After the transmission is completed, the MCU returns to standby mode. The other logic is the same as the touch-button scheme.

It should be understood that although the various steps in the flowcharts according to the embodiments described above are displayed in the order indicated by the arrows, these steps are not necessarily executed in the order indicated by the arrows. Unless otherwise specified in this description, there is no strict order limit for the execution of these steps, and they may be executed in other orders. Moreover, at least some of the steps in the flowcharts according to the embodiments described above may include multiple steps or stages, which are not necessarily completed at the same time, but may be executed at different times. The order of execution of these steps or stages is not necessarily sequential, but may be rotated or alternated with at least some of the steps or stages in other steps or steps.

Based on the same inventive concept, the present embodiment further provides a touch-screen operating apparatus for implementing the touch-screen operating method mentioned above. The implementation solution provided by the device to solve the problem is similar to the implementation solution described in the above method. Therefore, the specific limitations of one or more embodiments of the touch-screen operating apparatus provided below may refer to the limitations of the touch-screen operating method mentioned above, which will not be repeated here.

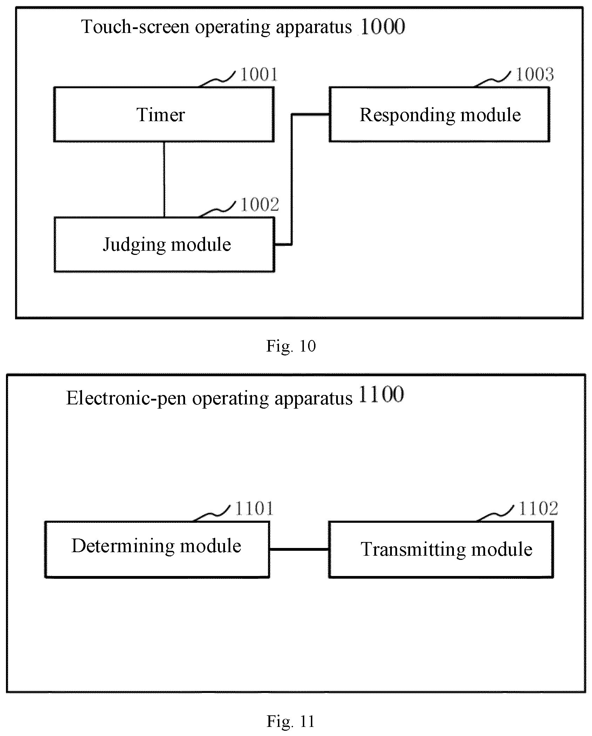

In an exemplary embodiment, as shown in Fig. 10, a touch-screen operating apparatus 1000 is provided, the touch-screen operating apparatus 1000 is applied to an electronic device, the electronic device is equipped with a touch screen, the electronic device is further equipped with an electronic pen, and the electronic pen has a tip and at least one color gear capable of being triggered, the touch-screen operating apparatus 1000 includes: a timer 1001, a judging module 1002, a responding module 1003,
the timer 1001 configured to, when a target color signal transmitted by the electronic pen is received, start a timer; where the target color signal is generated by the electronic pen when both the target color gear and the tip are triggered simultaneously;
the judging module 1002 configured to, when first coordinate information is obtained within a preset period, judge that the coordinate information is an electronic-pen triggering event; where the first coordinate information is generated by the touch screen responding to a first touch input;
the responding module 1003 configured to, based on the target color signal and the first coordinate information, respond to the electronic-pen triggering event on the touch screen.

In an embodiment, the responding module 1003 is further configure to determine a writing trajectory based on the first coordinate information; determine a target color of the writing trajectory based on the target color signal; and display the writing trajectory on the touch screen based on the target color.

In an embodiment, the judging module 1002 is further configured to, when the first coordinate information is not obtained within the preset period, regard the target color signal as an interference signal.

In an embodiment, the judging module 1002 is further configured to, when the target color signal is not obtained, in response to a second touch operation on the touch screen, obtain second coordinate information and judge that the second coordinate information is a non-electronic-pen triggering event; and respond to non-electronic-pen triggering event on the touch screen based on the second coordinate information.

In an embodiment, the responding module 1003 is further configure to determine a touch trajectory based on the second coordinate information; and adjust a display content on the touch screen based on the touch trajectory.

The various modules in the above-mentioned touch-screen operating apparatus may be fully or partially implemented through software, hardware, and their combinations. The above modules may be embedded in hardware form or independent of the processor in the computer device, or stored in software form in the memory of the computer device, so that the processor may call and execute the corresponding operations of the above modules.

Based on the same inventive concept, the present embodiment further provides a touch-screen operating apparatus for implementing the electronic-pen operating method mentioned above. The implementation solution provided by the device to solve the problem is similar to the implementation solution described in the above method. Therefore, the specific limitations of one or more electronic-pen operating apparatus embodiments provided below may refer to the limitations of the electronic-pen operating method mentioned above, which will not be repeated here.

In an exemplary embodiment, as shown in Fig. 11, an electronic-pen operating apparatus 1100 is provided, the electronic-pen operating apparatus 1100 is applied to an electronic pen equipped with a tip and at least one color gear capable of being triggered, the electronic pen is further equipped with an electronic device having a touch screen, the electronic-pen operating apparatus includes: a determining module 1101 and a transmitting module 1102,
the determining module 1101 is configured to, when the target color gear is triggered, determine the target color corresponding to the target color gear;
the transmitting module 1102 is configured to, when the tip is triggered, generate a target color signal corresponding to the target color, and transmit the target color signal to the electronic device; where the target color signal is used to indicate the electronic device to start a timer, judge that the coordinate information is an electronic-pen triggering event when first coordinate information is obtained within a preset period, and based on the target color signal and the first coordinate information, respond to the electronic-pen triggering event on the touch screen; where the first coordinate information is generated by the touch screen responding to the first touch operation.

In an embodiment, the electronic pen is equipped with at least one independent non-self-locking button, each non-self-locking button corresponds to a color gear, and each non-self-locking button is equipped with a color indicator light that matches the corresponding color gear;
the determining module 1101 is further configured to, when the non-self-locking button corresponding to the target color gear is pressed, determining the target color corresponding to the target color gear, turning on the color indicator light corresponding to the target color gear until the non-self-locking button corresponding to the new color gear is pressed;
the transmitting module 1102 is further configured to, when the tip is triggered, generate a target color signal corresponding to the target color and transmitting the target color signal to the electronic device.

In an embodiment, the electronic pen is equipped with a toggle switch, the toggle switch includes multiple toggle positions, each toggle position corresponds to a color gear, and each toggle position is equipped with a color identifier that matches the corresponding color gear; the method further includes:
the determining module 1101 is further configured to, when the tip is triggered, recognize the target color gear triggered currently; where the target color gear is determined based on a toggle position where the toggle switch is located, and the target color gear is used to determine the target color;
the transmitting module 1102 is further configured to generate a target color signal corresponding to the target color and transmit the target color signal to the electronic device; when the electronic device receives the target color signal, switch to a low-power mode until the toggle switch changes the toggle position.

The various modules in the above-mentioned electronic-pen operating apparatus may be fully or partially implemented through software, hardware, and their combinations. The above modules may be embedded in hardware form or independent of the processor in the computer device, or stored in software form in the memory of the computer device, so that the processor may call and execute the corresponding operations of the above modules.

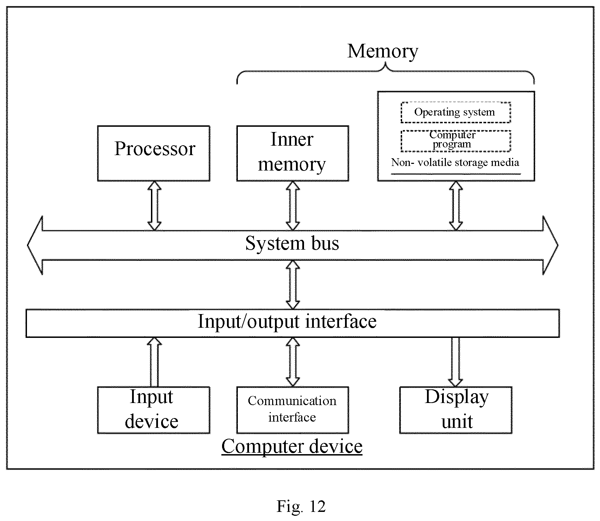

In an exemplary embodiment, a computer device is provided, the computer device may be a terminal, and its internal structure diagram may be as shown in Fig. 12. The computer device includes a processor, a memory, an input/output interface, a communication interface, a display unit, and an input device. The processor, the memory, and the input/output interface are connected through a system bus, while the communication interface, the display unit, and the input device are connected to a system bus through the input/output interface. The processor of the computer device is used to provide computing and control capabilities. The memory of the computer device includes a non-volatile storage media and an internal memory. This non-volatile storage medium stores an operating system and computer programs. This internal storage provides an environment for the operation of operating systems and computer programs in non-volatile storage media. The input/output interface of this computer device is used for exchanging information between the processor and external devices. The communication interface of this computer device is used for wired or wireless communication with external terminals. Wireless communication may be achieved through WIFI, mobile cellular network, Near Field Communication (NFC), or other technologies. This computer program is executed by a processor to implement a touch-screen operating method. The display unit of the computer device is used to form visually visible images, which may be a display screen, a projection device, or a virtual reality imaging device. The display screen may be a liquid crystal display screen or an electronic ink display screen. The input device of the computer device may be the touch layer covered on the display screen, the buttons, trackball or touchpad arranged on the computer device casing, or an external keyboard, touchpad or mouse.

Those skilled in the art may understand that the structure shown in Fig. 12 is only a block diagram of a part of the structure related to the present disclosure, and does not constitute a limitation on the computer equipment to which the present disclosure is applied. Specific computer equipment may include more or fewer components than shown in the figure, or combine certain components, or have different component arrangement.

In an exemplary embodiment, a computer device is provided, including a memory and a processor, the memory stores a computer program, and when the processor executes the computer program, the following steps are performed: when a target color signal transmitted by the electronic pen is received, starting a timer; where the target color signal is generated by the electronic pen when both the target color gear and the tip are triggered simultaneously; when first coordinate information is obtained within a preset period, judging that the coordinate information is an electronic-pen triggering event; where the first coordinate information is generated by the touch screen responding to a first touch input; and based on the target color signal and the first coordinate information, responding to the electronic-pen triggering event on the touch screen.

In an embodiment, when the processor executes the computer program, the following steps are further performed: determining a writing trajectory based on the first coordinate information; determining a target color of the writing trajectory based on the target color signal; and displaying the writing trajectory on the touch screen based on the target color.

In an embodiment, when the processor executes the computer program, the following steps are further performed: when the first coordinate information is not obtained within the preset period, regarding the target color signal as an interference signal.

In an embodiment, when the processor executes the computer program, the following steps are further performed: when the target color signal is not obtained, in response to a second touch operation on the touch screen, obtaining second coordinate information and judging that the second coordinate information is a non-electronic-pen triggering event; and responding to non-electronic-pen triggering event on the touch screen based on the second coordinate information.

In an embodiment, when the processor executes the computer program, the following steps are further performed: determining a touch trajectory based on the second coordinate information; and adjusting a display content on the touch screen based on the touch trajectory.

In an embodiment, a computer-readable storage medium is provided, on which a computer program is stored, when the computer program is executed by a processor, the following steps are performed: when a target color signal transmitted by the electronic pen is received, starting a timer; where the target color signal is generated by the electronic pen when both the target color gear and the tip are triggered simultaneously; when first coordinate information is obtained within a preset period, judging that the coordinate information is an electronic-pen triggering event; where the first coordinate information is generated by the touch screen responding to a first touch input; and based on the target color signal and the first coordinate information, responding to the electronic-pen triggering event on the touch screen.

In an embodiment, when the computer program is executed by a processor, the following steps are further performed: determining a writing trajectory based on the first coordinate information; determining a target color of the writing trajectory based on the target color signal; and displaying the writing trajectory on the touch screen based on the target color.

In an embodiment, when the computer program is executed by a processor, the following steps are further performed: when the first coordinate information is not obtained within the preset period, regarding the target color signal as an interference signal.

In an embodiment, when the computer program is executed by a processor, the following steps are further performed: when the target color signal is not obtained, in response to a second touch operation on the touch screen, obtaining second coordinate information and judging that the second coordinate information is a non-electronic-pen triggering event; and responding to non-electronic-pen triggering event on the touch screen based on the second coordinate information.

In an embodiment, when the computer program is executed by a processor, the following steps are further performed: determining a touch trajectory based on the second coordinate information; and adjusting a display content on the touch screen based on the touch trajectory.

In an embodiment, a computer program product is provided, including a computer program, when the computer program is executed by a processor, the following steps are performed: when a target color signal transmitted by the electronic pen is received, starting a timer; where the target color signal is generated by the electronic pen when both the target color gear and the tip are triggered simultaneously; when first coordinate information is obtained within a preset period, judging that the coordinate information is an electronic-pen triggering event; where the first coordinate information is generated by the touch screen responding to a first touch input; and based on the target color signal and the first coordinate information, responding to the electronic-pen triggering event on the touch screen.

In an embodiment, when the computer program is executed by a processor, the following steps are further performed: determining a writing trajectory based on the first coordinate information; determining a target color of the writing trajectory based on the target color signal; and displaying the writing trajectory on the touch screen based on the target color.

In an embodiment, when the computer program is executed by a processor, the following steps are further performed: when the first coordinate information is not obtained within the preset period, regarding the target color signal as an interference signal.

In an embodiment, when the computer program is executed by a processor, the following steps are further performed: when the target color signal is not obtained, in response to a second touch operation on the touch screen, obtaining second coordinate information and judging that the second coordinate information is a non-electronic-pen triggering event; and responding to non-electronic-pen triggering event on the touch screen based on the second coordinate information.

In an embodiment, when the computer program is executed by a processor, the following steps are further performed: determining a touch trajectory based on the second coordinate information; and adjusting a display content on the touch screen based on the touch trajectory.

It should be noted that the user information (including but not limited to user device information, user personal information, etc.) and data (including but not limited to data used for analysis, data for storage, data for display, etc.) according to the present disclosure are all authorized by the user or fully authorized by all parties, and the collection, use, and processing of relevant data must comply with relevant regulations.

Those in the art may understand that implementing all or part of the processes of the embodiments of the above methods may be accomplished by instructing relevant hardware through a computer program. The computer program may be stored in a non-volatile computer-readable storage medium, and when the computer program is executed, it may include the processes of the embodiments of the above methods. Any reference to memory, database, or other media used in the embodiments of the present disclosure may include at least one of non-volatile and volatile memory. Non-volatile memory may include Read Only Memory (ROM), magnetic tape, floppy disk, flash memory, optical memory, high-density embedded non-volatile memory, Resistive Random Access Memory (ReRAM), Magnetoresistive Random Access Memory (MRAM), Ferroelectric Random Access Memory (FRAM), Phase Change Memory (PCM), graphene memory, etc. Volatile memory may include Random Access Memory (RAM), RAM or external cache memory, etc. As an illustration and not a limitation, RAM may take various forms, such as Static Random Access Memory (SRAM) or Dynamic Random Access Memory (DRAM). The databases according to the various embodiments of the present disclosure may include at least one of relational databases and non-relational databases. Non-relational databases may include distributed databases based on block-chain, but are not limited to these. The processors according to the various embodiments of the present disclosure may be general-purpose processors, central processing units, graphics processors, digital signal processors, programmable logic units, quantum computing based data processing logic units, etc., but are not limited to these.

The various technical features of the embodiments described above may be combined in any way. In order to make the description concise, not all possible combinations of the various technical features in the embodiments have been described. However, as long as there is no contradiction in the combination of these technical features, they should be considered within the scope of this description.

The above embodiments only express several embodiments of the present disclosure, and their descriptions are more specific and detailed, but should not be understood as limiting the scope of the patent disclosure. It should be pointed out that for those skilled in the art, several modifications and improvements may be made without departing from the concept of the present disclosure, which are within the scope of protection of the present disclosure. Therefore, the scope of protection of the present disclosure should be based on the attached claims.

## Claims

1. A touch-screen operating method, **characterized in that**, the touch-screen operating method is applied to an electronic device equipped with a touch screen, the electronic device is further equipped with an electronic pen, and the electronic pen has a tip and at least one color gear capable of being triggered, the touch-screen operating method comprises:
when a target color signal transmitted by the electronic pen is received, starting a timer; wherein the target color signal is generated by the electronic pen when both the target color gear and the tip are triggered simultaneously; and
when first coordinate information is obtained within a preset period, based on the target color signal and the first coordinate information, producing a response by the touch screen, wherein the first coordinate information is generated by the touch screen responding to a touch operation.

2. The method of claim 1, **characterized in that**, the based on the target color signal and the first coordinate information, producing a response by the touch screen comprises:
determining a writing trajectory based on the first coordinate information;
determining a target color of the writing trajectory based on the target color signal; and
displaying the writing trajectory on the touch screen based on the target color.

3. The method of claim 1, **characterized in that**, when the first coordinate information is not obtained within the preset period, the target color signal is regarded as an interference signal that does not need respond.

4. The method of claim 1, **characterized in that**, the method further includes:
when the target color signal is not obtained, obtaining second coordinate information in response to a touch operation on the touch screen; and
producing a response by the touch screen based on the second coordinate information.

5. The method of claim 4, **characterized in that**, the producing a response by the touch screen based on the second coordinate information comprises:
determining a touch trajectory based on second coordinate information; and
adjusting a display content on the touch screen based on the touch trajectory.

6. The method of claim 4, **characterized in that**, the target color signal is an infrared encoded signal or a radio encoded signal.

7. An electronic-pen operating method, **characterized in that**, the electronic-pen operating method is applied to an electronic pen which is equipped with a tip and at least one color gear capable of being triggered, and an electronic device which is used in conjunction with the electronic pen and equipped with a touch screen, the electronic-pen operating method comprises:
when a target color gear and the tip are triggered, determining the target color corresponding to the target color gear, generating a target color signal corresponding to the target color, and transmitting the target color signal to the electronic device; wherein the target color signal is used to indicate the electronic device to start a timer, and respond on the touch screen based on the target color signal and the first coordinate information when first coordinate information is obtained within a preset period; wherein the first coordinate information is generated by the touch screen responding to a touch operation.

8. The method of claim 7, **characterized in that**, the electronic pen is equipped with at least one independent non-self-locking button, each non-self-locking button corresponds to a color gear, and each non-self-locking button is equipped with a color indicator light that matches the corresponding color gear; the method further comprises:
when the non-self-locking button corresponding to the target color gear is pressed, determining the target color corresponding to the target color gear, turning on the color indicator light corresponding to the target color gear until the non-self-locking button corresponding to the new color gear is pressed; and
when the tip is triggered, generating the target color signal corresponding to the target color and transmitting the target color signal to the electronic device.

9. The method of claim 7, **characterized in that**, the electronic pen is equipped with a toggle switch, the toggle switch includes multiple toggle positions, each toggle position corresponds to a color gear, and each toggle position is equipped with a color identifier that matches the corresponding color gear; the method further comprises
when the tip is triggered, recognizing the target color gear triggered currently;
wherein the target color gear is determined based on a toggle position where the toggle switch is located, and the target color gear is used to determine the target color;
generating a target color signal corresponding to the target color and transmitting the target color signal to the electronic device; and
when the electronic device receives the target color signal, switching to a low-power mode until the toggle switch changes the toggle position.

10. The method of claim 7, **characterized in that**, the target color signal is an infrared encoded signal or a radio encoded signal.

11. A touch-screen operating apparatus, **characterized in that**, the touch-screen operating apparatus is applied to an electronic device equipped with a touch screen, the electronic device is further equipped with an electronic pen, and the electronic pen has a tip and at least one color gear capable of being triggered, the apparatus comprises:
a timer configured to, when a target color signal transmitted by the electronic pen is received, start a timer; wherein the target color signal is generated by the electronic pen when both the target color gear and the tip are triggered simultaneously;
a judging module configured to, when first coordinate information is obtained within a preset period, judge that the coordinate information is an electronic-pen triggering event; wherein the first coordinate information is generated by the touch screen responding to a first touch input; and
a responding module configured to, based on the target color signal and the first coordinate information, produce a response to the electronic-pen triggering event by the touch screen.

12. A touch system, **characterized in that**, the touch system comprises an electronic device which is equipped with a touch screen, and an electronic pen which is equipped with a tip and at least one color gear capable of being triggered;
the electronic pen is configured to, when the target color gear and the tip are triggered, determine the target color corresponding to the target color gear, generate a target color signal corresponding to the target color, and transmit the target color signal to the electronic device;
the electronic device is configured to, when a target color signal transmitted by the electronic pen is received, start a timer; when first coordinate information is obtained within a preset period, based on the target color signal and the first coordinate information, produce a response by the touch screen; wherein the first coordinate information is generated by the touch screen responding to a touch operation.

13. A computer device, **characterized in that**, the computer device includes a memory and a processor, the memory stores a computer program, and when the processor executes the computer program, the method of any one of claims 1-6 are performed.

14. A computer-readable storage medium, on which a computer program is stored, **characterized in that**, the computer program, when executed by a processor, performs the method of any one of claims 1-6.

15. A computer program product, including a computer program, **characterized in that**, the computer program, when executed by a processor, performs the method of any one of claims 1-6.
